# EUROPEAN PATENT APPLICATION

(11) **EP 4 822 593 A1**
(43) Date of publication of application: **14.10.2026**
(21) Application number: 23960723.7
(22) Date of filing: 04.12.2023
(51) Int. Cl.: G06N 3/04

(54) **INFORMATION OUTPUT PROGRAM, INFORMATION OUTPUT METHOD, AND INFORMATION OUTPUT DEVICE**

(71) Applicant: FUJITSU LIMITED, Kawasaki-shi, Kanagawa 211-8588 (JP)
(72) Inventor: MATSUO, Tatsuru, Kawasaki-shi, Kanagawa 211-8588 (JP)
(74) Representative: Hoffmann Eitle
(86) International application number: PCT/JP2023/043324
(87) International publication number: WO 2025/120706

(57) **Abstract**

Conventional explanation techniques for graph machine training models have a problem in that, for example, when there are a plurality of graph patterns contributing to a specific prediction, the conventional techniques are incapable of exhaustively presenting those graph patterns. An information output program causes a computer to execute processing of specifying, for each of a plurality of pieces of graph data corresponding to at least one label corresponding to a prediction result of a trained graph machine training model, one or more nodes whose contribution degree to the prediction result of the graph data satisfies a predetermined condition, specifying a frequent graph pattern from partial graph data including the specified nodes in each of one or more groups obtained by classifying the specified nodes, and outputting information indicating the specified frequent graph pattern as explanatory information regarding the trained graph machine training model. As a result, the explainability of the graph machine training model can be improved.

## Description

### Technical Field

The present invention relates to an information output program, an information output method, and an information output device.

### Background

Conventionally, when a machine training technique is applied to graph data, which is a data format capable of representing connections between people and objects, for example, the graph data is converted into some vector data, and the converted vector data is trained by a machine training technique (decision tree, RandomForest, and the like) capable of training vector data.

In recent years, for example, Graph Artificial Intelligence (AI) such as Convolutional Graph Neural Network (ConvGNN) or Graph Convolutional Network that can directly handle graph data in its original form has emerged.

On the other hand, since the graph AI (model) has, for example, a black box portion in an internal structure or the like, there is also a technique for explaining the graph AI model by presenting a graph pattern contributing to a specific prediction (for example, a positive example in binary classification).

### Citation List

### Patent Literature

Non Patent Literature 1: Yuan, H., Tang, J., Hu, X., & Ji, S. XGNN: Towards Model-Level Explanations of Graph Neural Networks. https://doi.org/10.1145/3394486.3403085

### Summary of invention

### Technical Problem

However, the conventional explanation technique of the graph AI model (also referred to as a graph machine training model or the like) has a problem in that, for example, in a case in which there are a plurality of graph patterns contributing to specific prediction, it is not possible to exhaustively present the graph patterns.

In one aspect, an object is to improve the explainability of a graph machine training model.

### Solution to Problem

According to an aspect of an embodiment, an information output program that causes a computer to execute a process including specifying, for each of a plurality of pieces of graph data corresponding to at least one label corresponding to a prediction result of a trained graph machine training model, one or more nodes whose contribution degree to the prediction result of the graph data satisfies a predetermined condition, specifying a frequent graph pattern from partial graph data including the specified nodes in each of one or more groups obtained by classifying the specified nodes, and outputting information indicating the specified frequent graph pattern as explanatory information regarding the trained graph machine training model.

### Advantageous Effects of Invention

In one aspect, it is possible to improve the explainability of the graph machine training model.

### Brief Description of Drawings

FIG. 1 is a diagram illustrating an example of graph data.
FIG. 2 is a diagram illustrating an example of explanatory information by a technique for explaining graph AI.
FIG. 3 is a diagram for description of problems of a conventional technique for explaining graph AI.
FIG. 4 is a diagram illustrating an example of a graph AI explanation method according to the present embodiment.
FIG. 5 is a diagram illustrating a configuration example of an information output device 10 according to the present embodiment.
FIG. 6 is a diagram illustrating an example of input data according to the present embodiment.
FIG. 7 is a diagram illustrating an example of output data according to the present embodiment.
FIG. 8 is a diagram illustrating an example of an overall flow of graph AI explanation processing according to the present embodiment.
FIG. 9 is a diagram illustrating an example of processing of specifying a node having a high contribution degree according to the present embodiment.
FIG. 10 is a diagram illustrating an example of a neighboring graph according to the present embodiment.
FIG. 11 is a flowchart illustrating an example of a flow of graph AI explanation processing according to a first example.
FIG. 12 is a diagram illustrating an example of a frequent graph pattern specifying method in a second example.
FIG. 13 is a diagram illustrating an example of a relationship graph according to the second example.
FIG. 14 is a diagram illustrating an example of a frequent graph pattern extraction method according to the second example.
FIG. 15 is a flowchart illustrating another example of a flow of graph AI explanation processing according to the second example.
FIG. 16 is a diagram illustrating an example of input data according to the second example.
FIG. 17 is a diagram illustrating an example of output data according to the second example.
FIG. 18 is a diagram illustrating an example of a marker node according to a third example.
FIG. 19 is a diagram illustrating an example of a frequent graph pattern extraction method according to the third example.
FIG. 20 is a flowchart illustrating still another example of a flow of graph AI explanation processing according to the third example.
FIG. 21 is a diagram illustrating an example of output data according to the third example.
FIG. 22 is a diagram for description of a hardware configuration example of the information output device 10.

### Description of Embodiments

Hereinafter, an example of an information output program, an information output method, and an information output device according to the present embodiment will be described in detail with reference to the drawings. Note that the present embodiment is not limited to this example. In addition, the examples can be appropriately combined within a range that does not cause inconsistency.

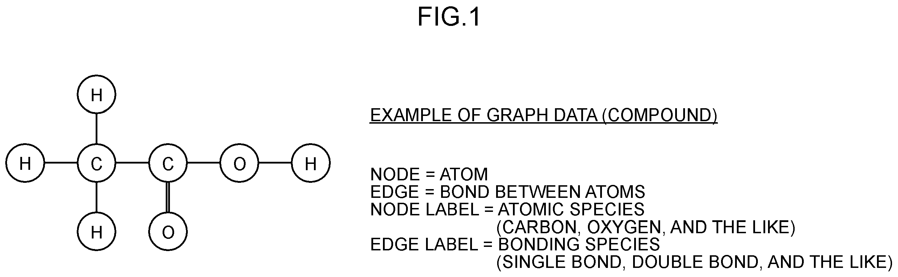

First, a conventional technique for explaining graph AI and problems thereof will be described with reference to FIGS. 1 to 3. Graph data used for training of a graph AI model is in a data format capable of representing connections between people and objects, and is used, for example, in a Social Networking Service (SNS), a compound, a communication history, a transaction history, and the like. In the graph data, for example, the subject of the connection is represented by a node, and the connection is represented by an edge.

FIG. 1 is a diagram illustrating an example of graph data. The example of FIG. 1 is graph data representing a compound. In FIG. 1, for example, circles represent nodes, lines connecting the nodes represent edges, atoms are represented by the nodes, and bonds between the atoms are represented by the edges. Furthermore, nodes and edges can be assigned labels to include attribute information, and such labels are referred to as node labels and edge labels, respectively. In the example of FIG. 1, atomic species such as carbon and oxygen are represented by node labels, and bonding species such as a single bond and a double bond are represented by edge labels. Note that a plurality of labels may be assigned to a single node or edge.

Next, graph AI such as ConvGNN, which is an existing technique, will be described. The graph AI is, for example, a machine training technique capable of training graph data. The graph AI is characterized in that, for example, graph data can be directly handled in its original form without being converted into vector data. Since the graph AI (model) has, for example, a black box portion in an internal structure or the like, there is also XAI (graph XAI) for graph AI as an existing technique for explaining a prediction result of graph data or a graph AI model.

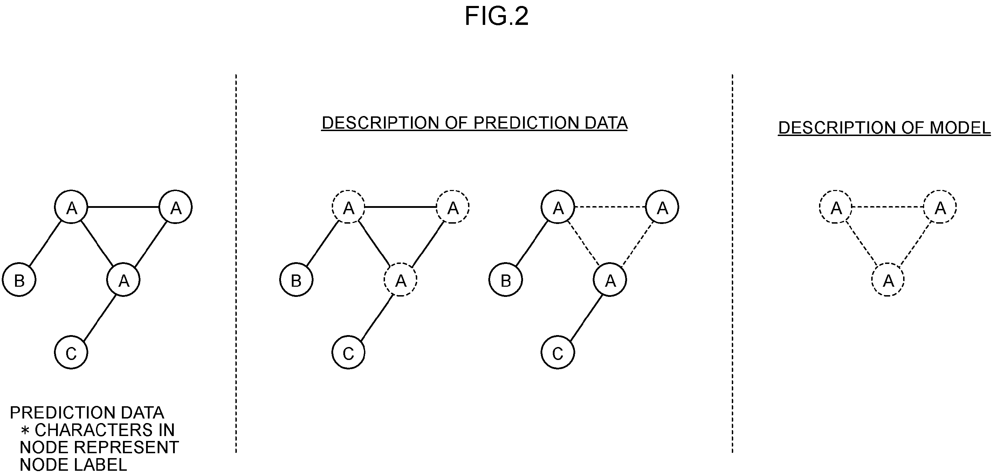

FIG. 2 is a diagram illustrating an example of explanatory information by a technique for explaining graph AI. In FIG. 2, the letters in a node represent a node label. Furthermore, the prediction data illustrated on the left side of FIG. 2 is, for example, graph data predicted by using a graph AI model. Furthermore, the explanatory information illustrated in the center of FIG. 2 is, for example, a graph element contributing to prediction of the target graph data, which is output using an existing technique such as GraphSVX or GNNExplainer (in GraphSVX, the node is highlighted, and in GNNExplainer, the edge is highlighted as the graph element). Furthermore, the explanatory information illustrated on the right side of FIG. 2 is, for example, explanatory information of the graph AI model, which is output using an existing technique such as XGNN for explaining the graph AI model. The example on the right side of FIG. 2 is, for example, a graph pattern contributing to specific prediction such as a positive example in binary classification.

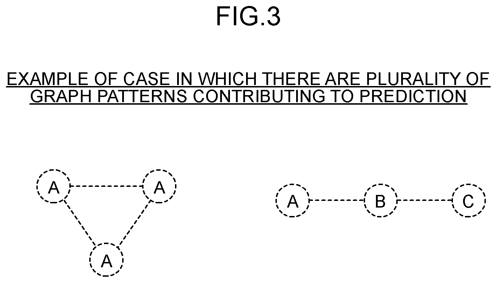

However, in the explanation technique of the graph AI model, for example, in a case in which there are a plurality of graph patterns contributing to specific prediction, it is not possible to exhaustively present the patterns. FIG. 3 is a diagram for description of problems of a conventional technique for explaining graph AI. FIG. 3 illustrates an example of a case in which there are a plurality of graph patterns contributing to prediction. For example, in the XGNN for explaining the graph AI model described with reference to FIG. 2, an edge is sequentially added to an initial graph pattern (for example, a single node) to find a graph pattern from which a specific prediction result can be obtained. Therefore, the search is completed when the current graph pattern coincides with one of the graph patterns contributing to prediction. Consequently, in a case in which a plurality of graph patterns contributing to the prediction are present as illustrated in FIG. 3, it is not possible to exhaustively find the full structure of the graph patterns. Therefore, an object of the present embodiment is to improve the explainability of the graph machine training model by presenting all graph patterns.

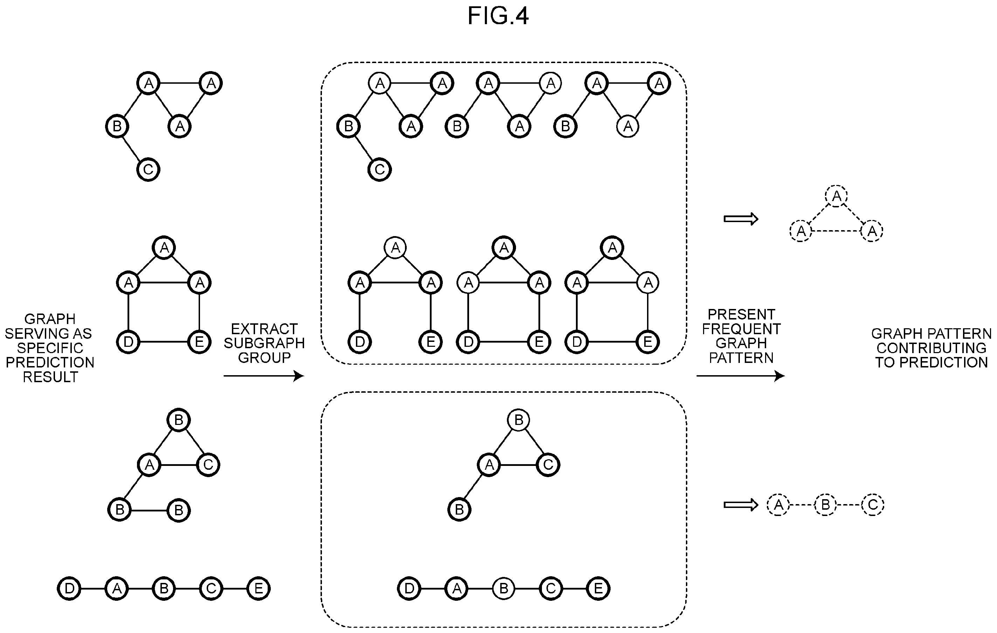

FIG. 4 is a diagram illustrating an example of a graph AI explanation method according to the present embodiment. Although details will be described later, in the present embodiment, for example, as illustrated in FIG. 4, a subgraph group expected to include a common graph pattern contributing to prediction is extracted from a group of graphs leading to a specific prediction result. Then, in the present embodiment, for example, a graph pattern frequently appearing in each subgraph group is presented as a graph pattern contributing to prediction. As a result, it is possible to exhaustively find all graph patterns and to improve the explainability of the graph machine training model.

### [Functional Configuration of Information Output Device 10]

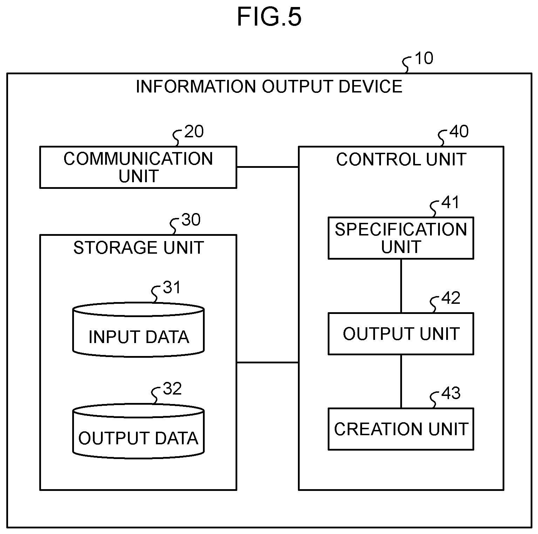

Next, a functional configuration of an information output device 10 will be described. FIG. 5 is a diagram illustrating a configuration example of an information output device 10 according to the present embodiment. As illustrated in FIG. 5, the information output device 10 includes a communication unit 20, a storage unit 30, and a control unit 40.

The communication unit 20 is a processing unit that controls communication with another information processing device, and is, for example, a communication interface such as a network interface card or a universal serial bus (USB) interface.

The storage unit 30 has a function of storing various data and a program executed by the control unit 40, and is implemented by, for example, a storage device such as a memory or a hard disk. The storage unit 30 stores, for example, input data 31, output data 32, and the like.

The input data 31 stores, for example, a plurality of pieces of graph data corresponding to at least one label corresponding to a prediction result of a trained graph machine training model, and information regarding input data such as a node feature and a contribution degree.

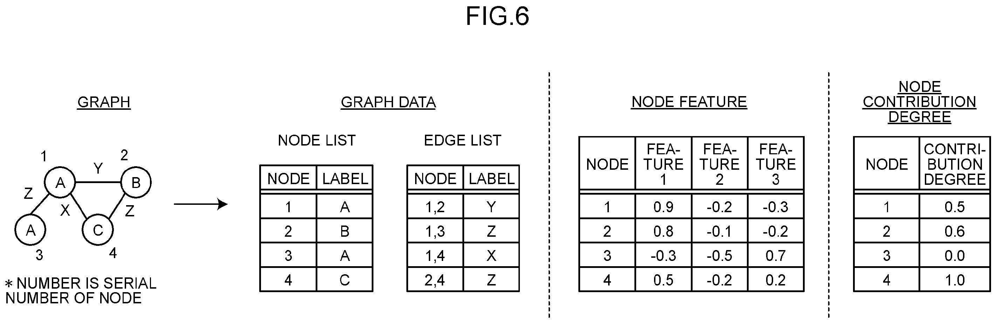

FIG. 6 is a diagram illustrating an example of input data according to the present embodiment. For example, as illustrated in FIG. 6, a graph data set for representing graph data representing a graph is stored in the input data 31. Note that the numbers in the graph on the left side of FIG. 6 are serial numbers of nodes. In addition, the graph data set is, for example, a set of graph data representing graphs having the same or similar prediction results. In addition, each piece of graph data of the graph data set includes, for example, a node list and an edge list, as illustrated in FIG. 6. The node list is, for example, a list of each node and a node label, and the node label may be a discrete value (may be a character string). Furthermore, the edge list is, for example, a list of each edge (node pair) and an edge label. The edge label is, for example, a discrete value (may be a character string), and in a case in which the node label or the edge label is a real value in the original graph AI, conversion into a discrete value as illustrated in FIG. 6 may need to be performed.

Furthermore, for example, each set of the node feature and the node contribution degree illustrated in the example in FIG. 6 is stored in the input data 31. The node feature set is, for example, a matrix of nodes and node feature amounts (real values). The node feature amounts are acquired, for example, when graph data is predicted by graph AI. The node contribution degree set is, for example, a list (real value) of the contribution degrees of the respective nodes. The node contribution degrees are calculated by, for example, the graph XAI of the existing technique. Furthermore, for example, the node contribution degree is normalized such that the contribution degree falls within a range of 0 to 1 in each graph in order to standardize the high/low standard of the contribution degree for each graph (for example, if contribution degree > threshold value is satisfied, a high contribution degree can be determined). Note that each list illustrated in FIG. 6 is an example, and the number of nodes, the number of edges, the number of node features, and the like are different for each graph.

Referring back to the description of FIG. 5, the output data 32 stores, for example, information related to the output data such as frequent graph data extracted based on the node features and the contribution degrees.

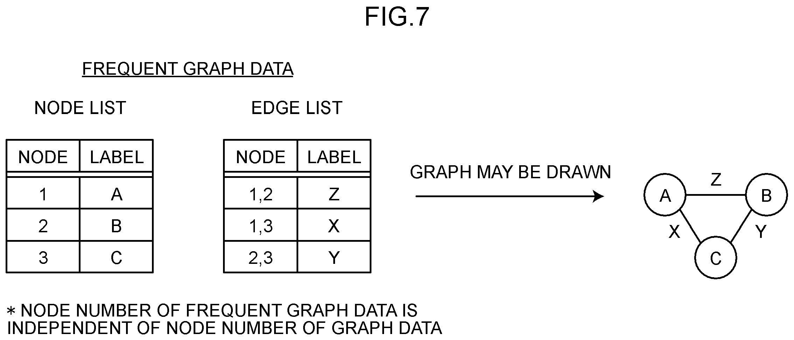

FIG. 7 is a diagram illustrating an example of output data according to the present embodiment. Although details will be described later, for example, a frequent graph data set for a cluster of nodes having a high contribution degree that has been clustered and extracted based on a node feature and a contribution degree as illustrated in FIG. 7 is stored in the output data 32. The format of the frequent graph data illustrated in FIG. 7 is, for example, similar to the graph data of the input data illustrated in FIG. 6. Note that there is no relevance between the node numbers of the frequent graph data illustrated in FIG. 7 and the graph data illustrated in FIG. 6. In addition, the frequent graph data may be used as it is, for example, as output data, or a graph may be drawn based on the frequent graph data and output, as illustrated in FIG. 7.

Note that the above information stored in the storage unit 30 is merely an example, and the storage unit 30 can store various information other than the above information.

The control unit 40 is a processing unit that controls the entire information output device 10, and is, for example, a processor or the like. The control unit 40 includes a specification unit 41, an output unit 42, and a creation unit 43. Note that each processing unit is an example of an electronic circuit included in the processor or an example of a process executed by the processor.

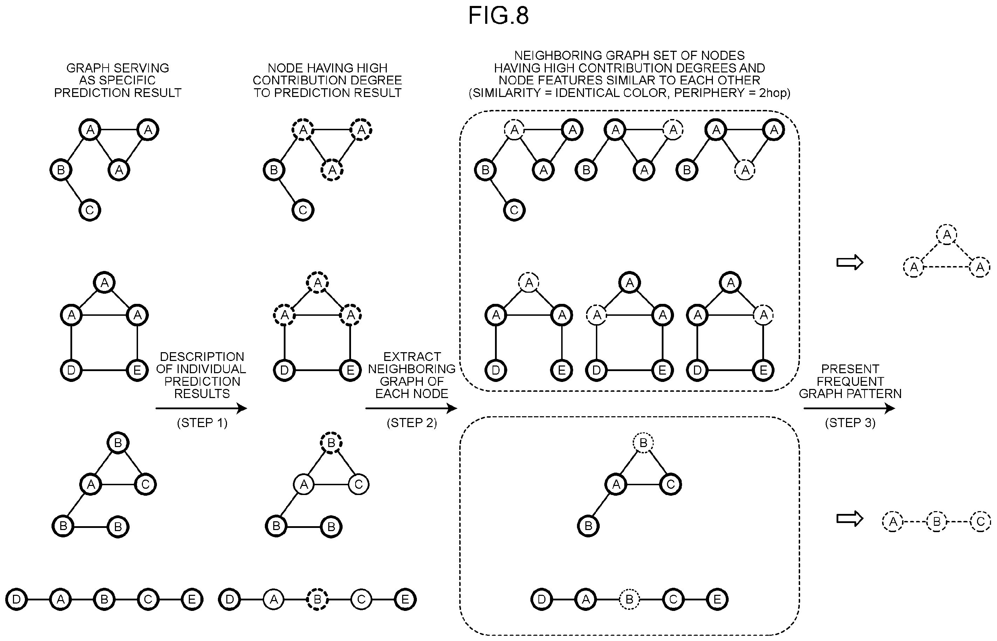

Next, an overall flow of graph AI explanation processing executed by the information output device 10 will be described in describing the respective processing units of the specification unit 41, the output unit 42, and the creation unit 43. FIG. 8 is a diagram illustrating an example of an overall flow of the graph AI explanation processing according to the present embodiment. FIG. 8 is an overall image diagram in which each processing in the graph AI explanation processing flows from left to right.

In the graph AI explanation processing according to the present embodiment, for example, as illustrated in FIG. 8, first, a node having a high contribution degree to the prediction result is specified from a plurality of graphs leading to a specific prediction result by a trained graph machine training model (Step 1). Next, for example, as illustrated in FIG. 8, a neighboring graph set of nodes having a high contribution degree and node features similar to each other is extracted from the specified nodes each having a high contribution degree (Step 2). Although there is no guarantee that clustering is cleanly performed as illustrated in FIG. 8, such clustering can be expected by using a node feature. Then, for example, as illustrated in FIG. 8, the frequent graph pattern of the extracted neighboring graph set is specified and presented (output) as explanatory information (Step 3).

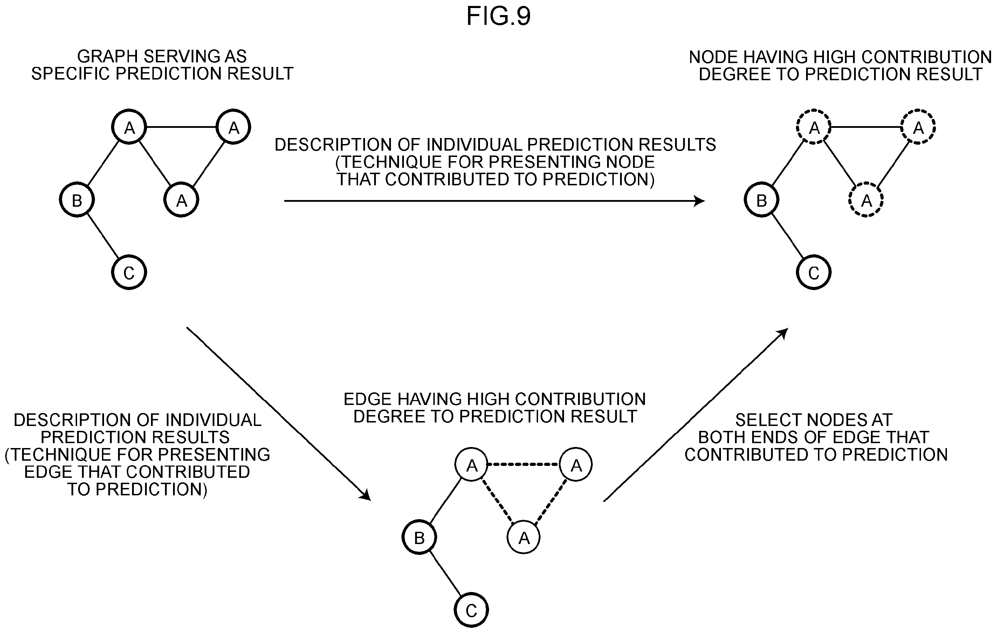

Referring back to the description of FIG. 5, the specification unit 41 specifies, for each of the plurality of pieces of graph data corresponding to at least one label corresponding to the prediction result of the trained graph machine training model, one or more nodes of which the contribution degree to the prediction result of the graph data is equal to or greater than a predetermined threshold value. The processing of specifying a node, the contribution degree of which is equal to or greater than a predetermined threshold value, corresponds to the processing of specifying a node having a high contribution degree in Step 1 in FIG. 8, and is executed using a conventional technique for explaining a prediction result of individual graph data. The processing of specifying a node having a high contribution degree will be described more specifically with reference to FIG. 9.

FIG. 9 is a diagram illustrating an example of processing of specifying a node having a high contribution degree according to the present embodiment. FIG. 9 is a diagram illustrating processing in which a node having a high contribution degree to the prediction result is specified from a graph leading to a specific prediction result by a trained graph machine training model. For example, a method using a technique of presenting a node contributing to prediction as illustrated in the upper route of FIG. 9 is optimal for specifying a node having a high contribution degree to the prediction result. However, for example, there may be a method of specifying an edge having a high contribution degree to the prediction result, which is specified using a technique of presenting an edge that has contributed to the prediction, as illustrated in the lower route of FIG. 9, and specifying nodes at both ends of the edge as nodes having a high contribution degree to the prediction result.

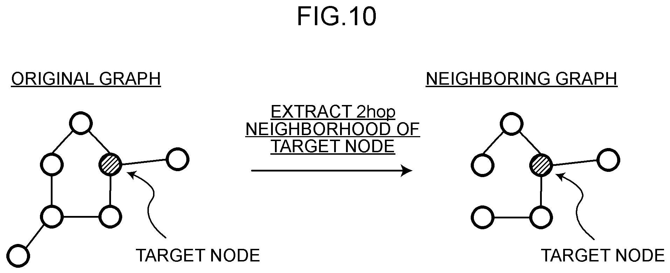

Referring back to the description of FIG. 5, the specification unit 41 specifies the frequent graph pattern from a partial graph data including the adjacent nodes having the number of hops within a predetermined number from the specified node in each of the one or more groups obtained by classifying the specified nodes. Note that, for example, the group corresponds to a set of nodes having high contribution degrees and node features similar to each other, which are extracted in Step 2 in FIG. 8, and the partial graph data corresponds to graph data of each graph in the neighboring graph set. Further, the processing of specifying the frequent graph pattern corresponds to, for example, the processing of specifying the frequent graph pattern in Step 3 in FIG. 8. Since there is no general definition of the neighboring graph, the neighboring graph will be described more specifically with reference to FIG. 10.

FIG. 10 is a diagram illustrating an example of a neighboring graph according to the present embodiment. The neighboring graph according to the present embodiment is, for example, a partial graph of an original graph, and is assumed to be information indicating a graph structure around a target node, which is one node having a high contribution degree to the prediction result. In FIG. 10, for example, a range traced by two hops (such as the number of hops or the number of edges) from the target node of the original graph is extracted as a neighboring graph. Note that, in the example of FIG. 10, a range in which the neighboring graph is extracted is set to 2 hops from the target node, but the number of hops may be smaller or larger than the range.

In addition, as illustrated in Step 2 of FIG. 8, the neighboring graph is extracted as a set of neighboring graphs of nodes having a high contribution degree and node features similar to each other from the specified nodes each having a high contribution degree. Here, the node feature will be described more specifically. Since there is no general definition of a node feature, in the present embodiment, for example, the following requirements (1) to (3) are satisfied. The node feature is (1) intermediate data generated by the graph AI model when graph data is predicted, and (2) can be regarded as a feature of a node captured by the graph AI model, and (3) similarity can be defined between nodes in the same graph and between nodes in different graphs.

In addition, for example, in a graph AI model of ConvGNN, which is an existing technique, input data to Pooling can be used as a node feature. For example, for each node, since the feature of the neighboring graph of the node is reflected by Gconv, a clustering result as illustrated in FIG. 8 can be expected.

In addition, the processing in which the specification unit 41 specifies the frequent graph pattern from the graph of the partial graph data, that is, the neighboring graph (set) can be implemented by, for example, an existing frequent graph mining technique such as gSpan. gSpan is, for example, a method of extracting a graph pattern frequently appearing in an input graph data set, and finds the frequent graph pattern while sequentially adding edges starting from the frequent edge. Note that the frequent graph pattern refers to, for example, a graph pattern in which the number of appearances in the graph data set is equal to or greater than a predetermined threshold value N.

Referring back to the description of FIG. 5, the output unit 42 outputs, for example, information indicating the frequent graph pattern specified by the specification unit 41 as explanatory information regarding the trained graph machine training model. The creation unit 43 will be described later.

### [First Example]

### [Processing Flow (First Example)]

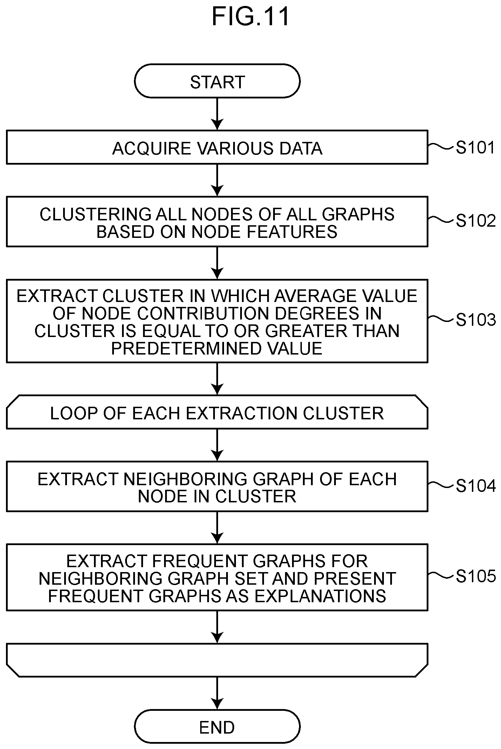

The above-described graph AI explanation processing executed by the information output device 10 will be described along the flow with reference to FIG. 11 as a first example. FIG. 11 is a flowchart illustrating an example of a flow of graph AI explanation processing according to the first example.

First, as illustrated in FIG. 11, the information output device 10 acquires, for example, various data from the input data 31 (Step S101). The various data may be, for example, a graph data set, a node feature set, or a node contribution degree set illustrated in FIG. 6.

Next, for example, the information output device 10 performs, based on the node features of the acquired node feature set, clustering on all the nodes of all the graphs of the graph data set acquired in Step S101 using the existing technique as described with reference to FIG. 8 (Step S102).

Next, the information output device 10 extracts, from the clusters of nodes clustered in Step S102, a cluster in which an average value of the node contribution degrees in the cluster is equal to or greater than a predetermined value (Step S103). Here, the cluster in which the average value of the node contribution degrees is equal to or greater than a predetermined value is, for example, a cluster of nodes (high contribution degree nodes) each having a high contribution degree to a specific prediction result by a trained graph machine training model. Note that, for example, clustering may be performed by extracting a high contribution degree node first. More specifically, for example, the information output device 10 extracts high contribution degree nodes from all the graphs of the acquired graph data set, and performs clustering on a set of the extracted high contribution degree nodes based on the node feature. In either processing, as illustrated in FIG. 8, a set of one or more nodes (cluster, group) having high contribution degrees and node features similar to each other can be extracted. Then, subsequent Steps S104 and S105 are looped (repeated) until there is no unprocessed cluster for each extracted cluster, as illustrated in FIG. 11.

Next, as described with reference to FIGS. 8 and 10, for example, the information output device 10 extracts a neighboring graph of each node in the cluster extracted in Step S103 (Step S104). Note that, for example, extraction of a neighboring graph of a node having a low contribution degree is optional.

Next, the information output device 10 extracts, for example, a frequent graph for the neighboring graph set extracted in Step S104 using an existing frequent graph mining technique such as gSpan, and presents (outputs) the extracted frequent graph as explanatory information (Step S105). The explanatory information may be, for example, the frequent graph data set illustrated in FIG. 7 or the frequent graph drawn based on the frequent graph data set, as illustrated in FIG. 7. Furthermore, in a case in which a plurality of frequent graphs are extracted, for example, the number of frequent graphs to be output as the explanatory information may be narrowed down based on a predetermined standard. After the execution of Step S105, the graph AI explanation processing illustrated in FIG. 11 ends.

### [Second Example]

In the first example described with reference to FIG. 11, for example, in the extraction of the frequent graph using the existing frequent graph mining technique such as gSpan, there are problems as described in the following (1) to (3). Consequently, the extracted frequent graph is potentially insufficient as the explanatory information.

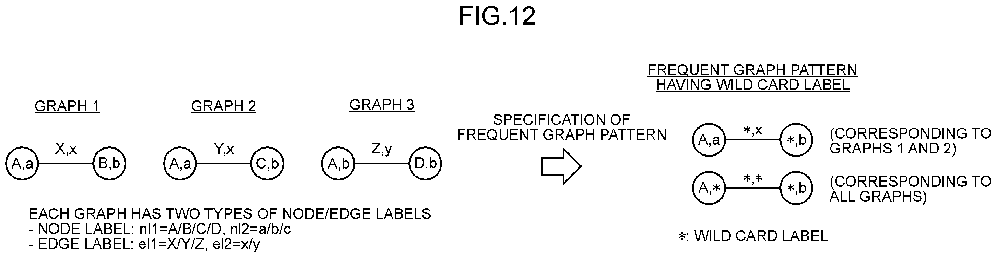

FIG. 12 is a diagram illustrating an example of a frequent graph pattern specifying method in a second example. In graphs 1 to 3 illustrated in FIG. 12, each node and each edge have a plurality of labels. In the example of FIG. 12, each node has two labels of node labels: nl1 = A/B/C/D, nl2 = a/b/c, and each edge has two labels of edge labels: el1 = X/Y/Z, and el2 = x/y. For example, since (1) gSpan can handle only one type of label, a plurality of labels need to be handled as a single combined label, and individual labels are unable to be considered independently. Further, (2) gSpan is incapable of determining that "two graphs are the same if this label is ignored". In addition, (3) since not all the labels of a specific node or edge need to contribute to the prediction, it is desirable to enable the label to be handled as a wildcard.

Therefore, in the second example, for example, as illustrated in FIG. 12, frequent labels can be specified for each label with respect to a graph having a plurality of node labels and edge labels, and wildcards are handled for the node labels and the edge labels in the frequency determination.

Therefore, for example, the information output device 10 creates a graph (hereinafter, referred to as a "relationship graph") representing a relationship among a node, an edge, a node label, and an edge label of an original graph, and specifies frequent graph patterns for the created relationship graph set. Note that the original graph here is, for example, a graph of partial graph data, that is, a neighboring graph. Then, the information output device 10 presents (outputs), for example, information obtained by converting the specified frequent graph pattern into the original graph representation as the explanatory information.

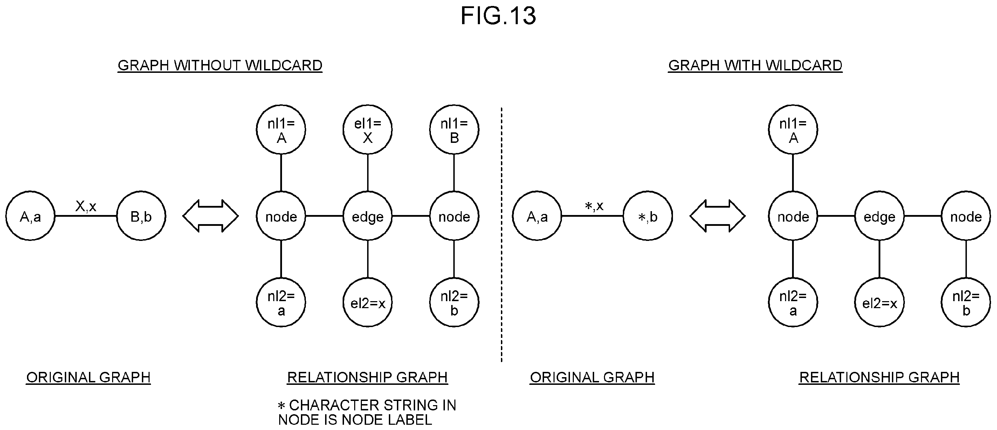

FIG. 13 is a diagram illustrating an example of the relationship graph according to the second example. As illustrated in FIG. 13, the information output device 10 creates, for example, a relationship graph indicating a relationship among a node, an edge, a node label, and an edge label of the original graph. That is, for example, the creation unit 43 of the information output device 10 creates, based on partial graph data, second partial graph data indicating the relationship among the node, the edge, the node label, and the edge label. The second partial graph data corresponds to, for example, the relationship graph. As illustrated in FIG. 13, in the relationship graph, for example, not only nodes but also edges, node labels, and edge labels of the original graph are converted into nodes and node labels and are represented, and related portions in the original graph are created to be connected to each other by edges. Furthermore, FIG. 13 illustrates, for example, a relationship graph for each of a case in which there is no wildcard in the original graph and a case in which there is a wildcard in the original graph. As illustrated on the right side of FIG. 13, in a case in which there is a wildcard in the original graph, for example, in the relationship graph, by not attaching a node or a node label to the wildcard portion, the portion may be anything, that is, can be handled as a wildcard.

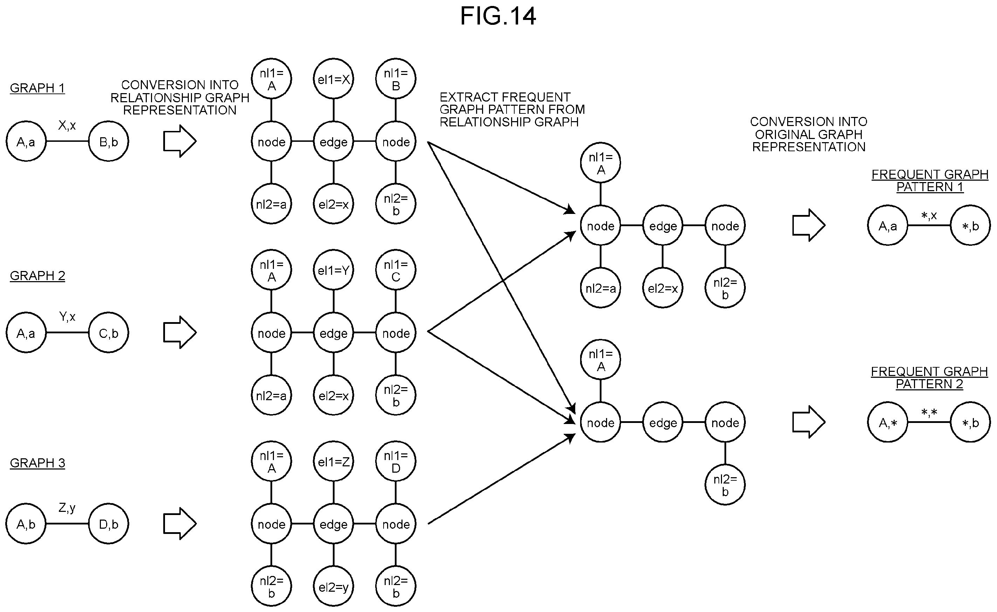

FIG. 14 is a diagram illustrating an example of a frequent graph pattern extraction method according to the second example. FIG. 14 illustrates a method of extracting frequent graph patterns from graphs 1 to 3 in which each node and each edge have two labels.

As illustrated in FIG. 14, first, for example, the information output device 10 creates a relationship graph representing a relationship among a node, an edge, a node label, and an edge label for each of the graphs 1 to 3, and converts the relationship graph into a relationship graph representation.

Next, for example, as illustrated in FIG. 14, the information output device 10 extracts a frequent graph pattern for the relationship graph corresponding to the graphs 1 to 3 (hereinafter, the extracted frequent graph pattern may be referred to as a "frequent relationship graph"). Note that, since each node or label has only one label in the relationship graph, an existing frequent graph mining technique such as gSpan may be used to extract the frequent graph pattern from the relationship graph.

Then, for example, as illustrated in FIG. 14, the information output device 10 converts the extracted frequent graph pattern into an original graph representation and outputs the original graph representation as the frequent graph pattern. Note that, for example, as illustrated in FIG. 14, the information output device 10 can use a wildcard at the time of conversion into the original graph representation. That is, the specification unit 41 of the information output device 10 specifies the frequent graph pattern from, for example, the second partial graph data corresponding to the relationship graph.

In this way, for example, labels in the original graph can be considered individually because the labels are present as independent nodes in the relationship graph. In addition, for example, since a label handled as a wildcard in the original graph corresponds to a node that is not present in the relationship graph, the wildcard can be indirectly considered.

Note that the second example is not limited to a case in which each node and each edge in the graph has a plurality of labels, and can also be applied to a case in which each node and each edge has a single label (one label each).

### [Processing Flow (Second Example)]

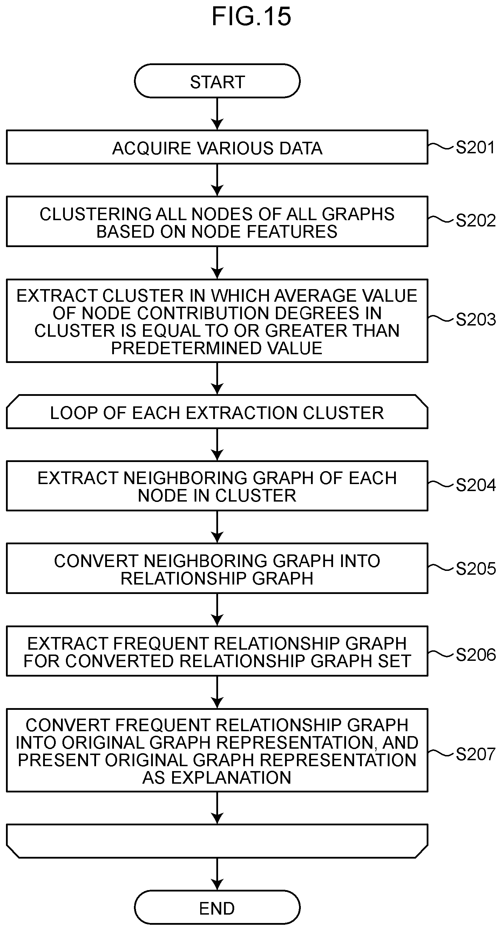

Next, as the second example, another example of the graph AI explanation processing executed by the information output device 10 will be described along the flow with reference to FIG. 15. FIG. 15 is a flowchart illustrating another example of a flow of the graph AI explanation processing according to the second example.

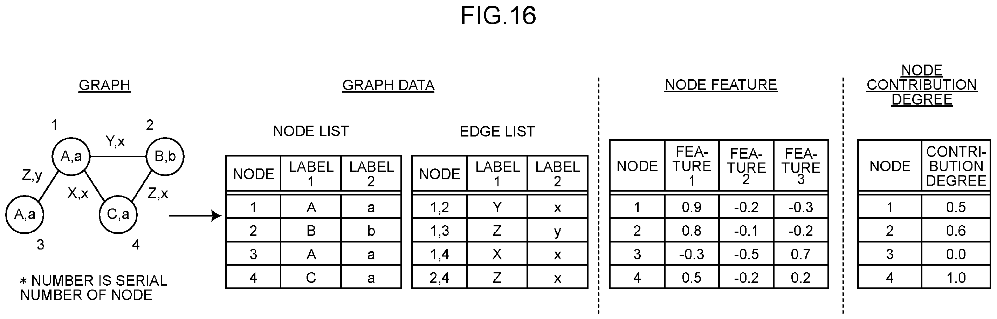

Steps S201 to S204 of the graph AI explanation processing illustrated in FIG. 15 are similar to Steps S101 to S104 of the graph AI explanation processing of the first example illustrated in FIG. 11. However, the various types of data acquired in Step S201 may be, for example, a graph data set, a node feature set, and a node contribution degree set illustrated in FIG. 16.

FIG. 16 is a diagram illustrating an example of input data according to the second example. The description of the various data illustrated in FIG. 16 is almost the same as the description of the various data illustrated in FIG. 6, but is different in that each node and each edge in the graph has a plurality of labels of two labels each, as illustrated in FIG. 16. Therefore, for example, as illustrated in FIG. 16, a node list of the graph data is a matrix of each node and each node label, and an edge list is a matrix of each edge (node pair) and edge label. Note that, for example, the number of node labels and the number of edge labels are the same in all graphs.

In the description of FIG. 15, Steps S201 to S204 are similar to Steps S101 to S104 of the graph AI explanation processing illustrated in FIG. 11, and thus, description will be given starting from Step S205. As illustrated in FIG. 15, for example, as described with reference to FIG. 13, the information output device 10 converts the neighboring graph extracted in Step S204 into a relationship graph (Step S205).

Next, as described with reference to FIG. 14, for example, the information output device 10 extracts a frequent relationship graph for the relationship graph set converted in Step S205 (Step S206).

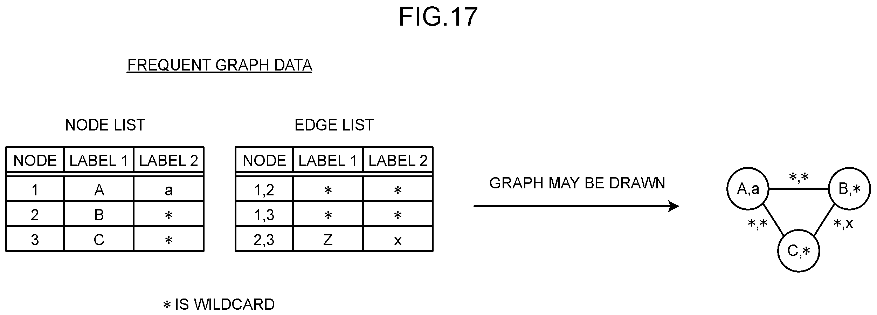

Next, as described with reference to FIG. 14, for example, the information output device 10 converts the frequent relationship graph extracted in Step S206 into an original graph representation and presents (outputs) the original graph representation as explanatory information (Step S207). The explanatory information may be, for example, the frequent graph data set illustrated in FIG. 17 or the frequent graph drawn based on the frequent graph data set, as illustrated in FIG. 17. FIG. 17 is a diagram illustrating an example of output data according to the second example. As illustrated in FIG. 17, for example, "*" indicating a wildcard may be used for a node label or an edge label handled as a wildcard in the explanatory information output in Step S207. After the execution of Step S207, the graph AI explanation processing illustrated in FIG. 15 ends.

### [Third Example]

For example, in extraction of frequent graphs using an existing frequent graph mining technique such as gSpan, a large number of frequent graph patterns are basically obtained due to the fact that, if a certain graph frequently appears, the partial graph thereof is also a frequent graph. That is, when the frequent graph pattern serving as the explanatory information is extracted by the existing frequent graph mining technique, there is a possibility that a frequent graph pattern not including a high contribution degree node is also extracted. However, there is a high possibility that the frequent graph pattern not including the high contribution degree node is low in value as the explanatory information, and thus, it is desirable to exclude the frequent graph pattern.

Therefore, as a third example, for example, the information output device 10 adds a marker node to the relationship graph, connects the marker node to a node corresponding to a center node (a high contribution degree node) of the neighboring graph, and excludes a frequent graph pattern if the frequent graph pattern of the relationship graph does not include the marker node. As a result, it is possible to specify the frequent graph pattern including the center node (high contribution degree node) of the neighboring graph and having a fixed position of the center node.

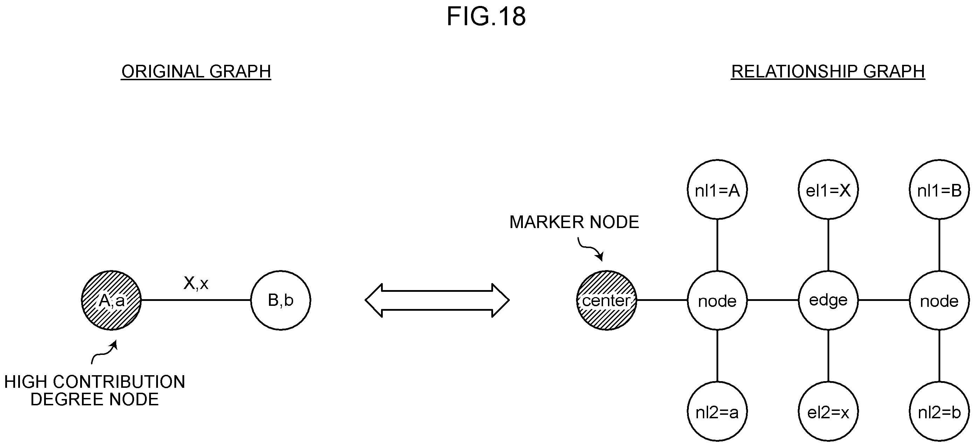

FIG. 18 is a diagram illustrating an example of a marker node according to the third example. As illustrated in FIG. 18, in the third example, a marker node is newly added to and connected to a node of the relationship graph, which corresponds to the center node (high contribution degree node) of the neighboring graph. That is, for example, the creation unit 43 of the information output device 10 creates second partial graph data corresponding to the relationship graph, including the marker node indicating the center node of the neighboring graph.

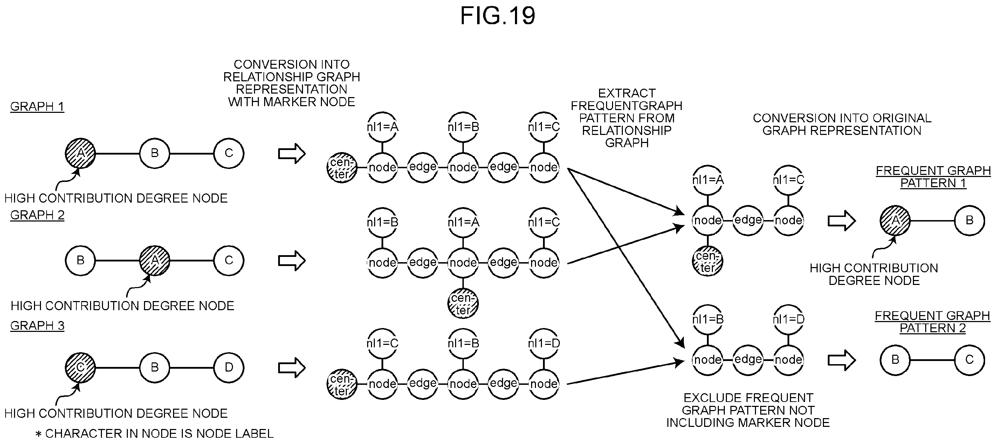

FIG. 19 is a diagram illustrating an example of a frequent graph pattern extraction method according to the third example. FIG. 19 illustrates a method of extracting frequent graph patterns including high contribution degree nodes from graphs 1 to 3.

As illustrated in FIG. 19, first, for example, the information output device 10 creates a relationship graph representing a relationship among a node, an edge, a node label, and an edge label for each of the graphs 1 to 3, and converts the relationship graph into a relationship graph representation. Furthermore, at this time, as illustrated in FIG. 19, for example, the information output device 10 connects a marker node to a node corresponding to a center node (a high contribution degree node) in the relationship graph.

Next, for example, as illustrated in FIG. 19, the information output device 10 extracts a frequent graph pattern for the relationship graph corresponding to the graphs 1 to 3 using an existing frequent graph mining technique such as gSpan.

Then, for example, as illustrated in FIG. 14, the information output device 10 converts the extracted frequent graph pattern into an original graph representation and outputs the original graph representation as a frequent graph pattern, but excludes a frequent graph pattern that does not include the high contribution degree node from a presentation target. For example, in the example of FIG. 14, since a frequent graph pattern 2 does not include a high contribution degree node, the information output device 10 excludes the frequent graph pattern 2 from the presentation target and presents only a frequent graph pattern 1. That is, the specification unit 41 of the information output device 10 specifies, for example, from the second partial graph data corresponding to the relationship graph, a frequent graph pattern including a marker node indicating a node whose contribution degree to the prediction result of the graph data is equal to or greater than a predetermined threshold value. Note that, in the example of FIG. 14, the frequent graph pattern 2 is output for convenience, but it can be determined whether the marker node is included at the time of extracting the frequent relationship graph. Therefore, when the marker node is not included in a frequent relationship graph, the frequent graph pattern does not need to be output.

### [Processing Flow (Third Example)]

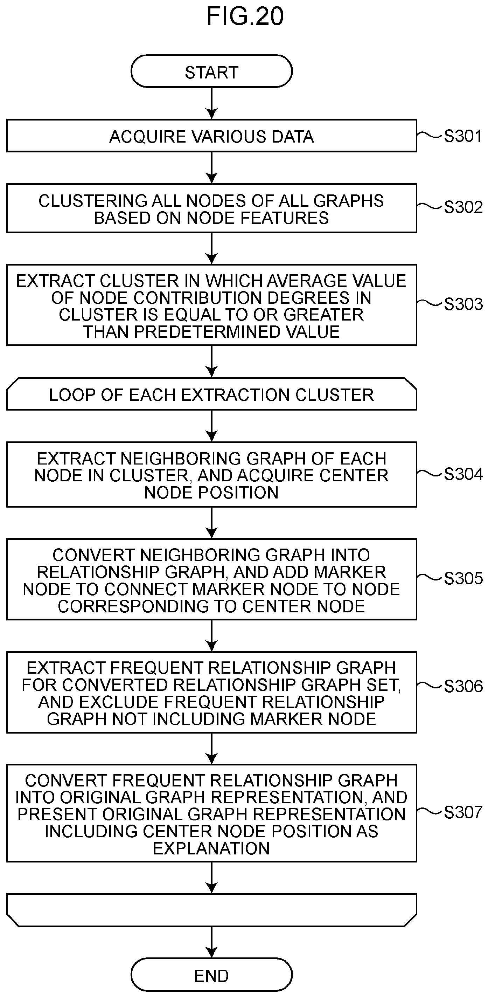

Next, as the third example, still another example of the graph AI explanation processing executed by the information output device 10 will be described along the flow with reference to FIG. 20. FIG. 20 is a flowchart illustrating still another example of a flow of graph AI explanation processing according to the third example.

Steps S301 to S303 of the graph AI explanation processing illustrated in FIG. 20 are similar to Steps S101 to S103 of the graph AI explanation processing of the first example illustrated in FIG. 11 or Steps S201 to S203 of the graph AI explanation processing of the second example illustrated in FIG. 15. Therefore, the various types of data acquired in Step S301 may be the graph data set, the node feature set, and the node contribution degree set illustrated in FIG. 6 as in the first example, or the graph data set, the node feature set, and the node contribution degree set illustrated in FIG. 16 as in the second example. In addition, the description of FIG. 20 will also be provided from Step S304.

As illustrated in FIG. 20, for example, as described with reference to FIG. 18, the information output device 10 extracts a neighboring graph of each node in the cluster and acquires the position of a center node (a high contribution degree node) (Step S304).

Next, as described with reference to FIG. 18, for example, the information output device 10 converts the neighboring graph into a relationship graph, adds a marker node thereto, and connects the marker node to a node corresponding to the center node whose position has been acquired in Step S304 (Step S305).

Next, as described with reference to FIG. 19, for example, the information output device 10 extracts a frequent relationship graph for the relationship graph set converted in Step S305, and excludes a frequent relationship graph not including the marker node (Step S306).

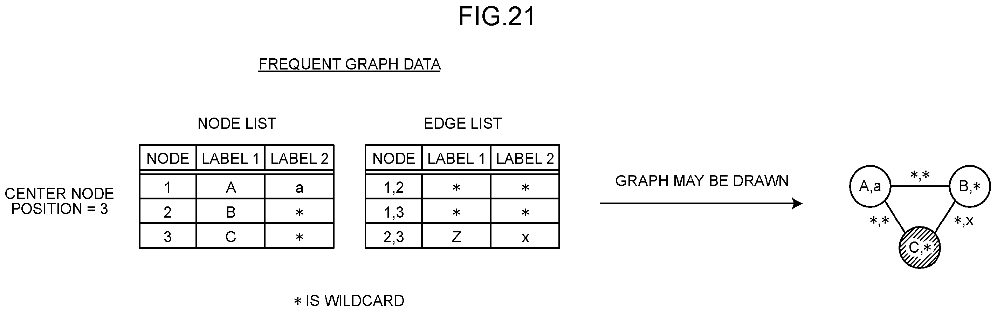

Next, as described with reference to FIG. 19, for example, the information output device 10 converts the frequent relationship graph including the marker node, which was extracted in Step S306, into an original graph representation, and presents (outputs) the original graph representation as explanatory information including the center node position (Step S307). The explanatory information may be, for example, the frequent graph data set illustrated in FIG. 21 or the frequent graph drawn based on the frequent graph data set, as illustrated in FIG. 21. FIG. 21 is a diagram illustrating an example of output data according to the third example. As illustrated in FIG. 21, for example, the explanatory information output in Step S307 may include, for example, position information of the center node or a frequent graph in which the center node is highlighted. After the execution of Step S307, the graph AI explanation processing illustrated in FIG. 20 ends.

### [Effects]

As described above, the information output device 10 specifies one or more nodes in which a contribution degree to a prediction result of graph data satisfies a predetermined condition for each of the plurality of pieces of graph data corresponding to at least one label corresponding to a prediction result of a trained graph machine training model, specifies a frequent graph pattern from partial graph data including the specified node in each of one or more groups obtained by classifying the specified nodes, and outputs information indicating the specified frequent graph pattern as explanatory information regarding the trained graph machine training model.

In this manner, the information output device 10 extracts a neighboring graph from the high contribution degree node specified from the graph data, and outputs the frequent graph pattern of the neighboring graph set as the explanatory information regarding the trained graph machine training model. As a result, the information output device 10 can improve the explainability of the graph machine training model.

In addition, partial graph data includes adjacent nodes within a predetermined number of hops from the specified node, the information output device 10 creates second partial graph data indicating a relationship among a node, an edge, a node label, and an edge label based on the partial graph data, and the processing of specifying the frequent graph pattern executed by the information output device 10 includes the processing of specifying the frequent graph pattern from the second partial graph data in each of the groups.

As a result, the information output device 10 can further improve the explainability of the graph machine training model.

In addition, the processing of creating the second partial graph data, which is executed by the information output device 10, includes the processing of creating the second partial graph data including the marker node indicating the center node of the specified neighboring graph, and the processing of specifying the frequent graph pattern from the second partial graph data includes the processing of specifying the frequent graph pattern including the marker node from the second partial graph data in each of the groups.

As a result, the information output device 10 can further improve the explainability of the graph machine training model.

### [System]

The processing procedure, the control procedure, the specific name, and the information including various data and parameters illustrated in the document or the drawings may be arbitrarily changed unless otherwise specified. Furthermore, the specific examples, distributions, numerical values, and the like described in the example are merely examples, and may be arbitrarily changed.

In addition, specific forms of distribution and integration of the components of each device are not limited to those illustrated in the drawings. That is, all or a part of the components may be functionally or physically distributed/integrated in an arbitrary unit according to various loads, usage conditions, and the like. Furthermore, all or an arbitrary part of each processing function of each device can be implemented by a Central Processing Unit (CPU) and a program analyzed and executed by the CPU, or can be implemented as hardware by wired logic.

### [Hardware]

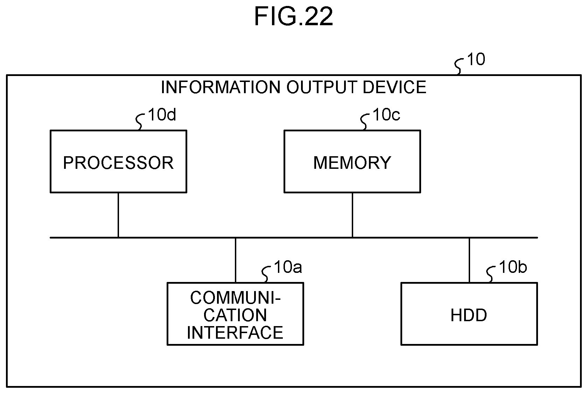

FIG. 22 is a diagram for description of a hardware configuration example of the information output device 10. As illustrated in FIG. 22, the information output device 10 includes a communication interface 10a, a Hard Disk Drive (HDD) 10b, a memory 10c, and a processor 10d. Further, the respective units illustrated in FIG. 22 are connected to each other by a bus or the like.

The communication interface 10a is a network interface card or the like, and communicates with another server. The HDD 10b stores programs and DBs for operating the functions illustrated in FIG. 5.

The processor 10d is a hardware circuit that reads a program for executing processing similar to that of each processing unit illustrated in FIG. 5 from the HDD 10b or the like and loads the program in the memory 10c to operate a process for executing each function described with reference to FIG. 5 and the like. That is, this process executes a function similar to each processing unit included in the information output device 10. Specifically, the processor 10d reads programs having functions similar to those of the specification unit 41, the output unit 42, the creation unit 43, and the like from the HDD 10b or the like. Then, the processor 10d executes a process of executing processing similar to that of the specification unit 41 and the like.

As described above, the information output device 10 operates as an information processing device that executes operation control processing by reading and executing a program that executes processing similar to that of each processing unit illustrated in FIG. 5. Furthermore, the information output device 10 can also implement functions similar to those of the above-described examples by reading a program from a recording medium by a medium reading device and executing the read program. Note that the program referred to in the other examples is not limited to being executed by the information output device 10. For example, the present embodiment may be similarly applied to a case in which another information processing device executes a program or a case in which the information output device 10 and another information processing device execute a program in cooperation with each other.

In addition, a program that executes processing similar to that of each processing unit illustrated in FIG. 5 can be distributed via a network such as the Internet. In addition, this program is recorded on a computer-readable recording medium such as a hard disk, a Flexible Disk (FD), a CD-ROM, a Magneto-Optical Disk (MO), or a Digital Versatile Disc (DVD), and can be executed by being read from the recording medium by the computer.

### Reference Signs List

10 INFORMATION OUTPUT DEVICE
10a COMMUNICATION INTERFACE
10b HDD
10c MEMORY
10d PROCESSOR
20 COMMUNICATION UNIT
30 STORAGE UNIT
31 INPUT DATA
32 OUTPUT DATA
40 CONTROL UNIT
41 SPECIFICATION UNIT
42 OUTPUT UNIT
43 CREATION UNIT

## Claims

1. An information output program that causes a computer to execute a process comprising:
specifying, for each of a plurality of pieces of graph data corresponding to at least one label corresponding to a prediction result of a trained graph machine training model, one or more nodes whose contribution degree to the prediction result of the graph data satisfies a predetermined condition;
specifying a frequent graph pattern from partial graph data including the specified nodes in each of one or more groups obtained by classifying the specified nodes; and
outputting information indicating the specified frequent graph pattern as explanatory information regarding the trained graph machine training model.

2. The information output program according to claim **1,** wherein
the partial graph data includes adjacent nodes within a predetermined number of hops from the specified nodes, wherein
the process further includes creating, based on the partial graph data, second partial graph data indicating relationships among the nodes, edges, node labels, and edge labels, and
the specifying the frequent graph pattern includes specifying the frequent graph pattern from the second partial graph data in each of the groups.

3. The information output program according to claim **2,** wherein
the creating the second partial graph data includes creating the second partial graph data including a marker node indicating the specified node, and
the specifying the frequent graph pattern from the second partial graph data includes specifying, in each of the groups, the frequent graph pattern including the marker node from the second partial graph data.

4. An information output method causing a computer to execute a process, comprising:
specifying, by a computer, for each of a plurality of pieces of graph data corresponding to at least one label corresponding to a prediction result of a trained graph machine training model, one or more nodes whose contribution degree to the prediction result of the graph data satisfies a condition;
specifying, by the computer, a frequent graph pattern from partial graph data including the specified nodes in each of one or more groups obtained by classifying the specified nodes; and
outputting, by the computer, information indicating the specified frequent graph pattern as explanatory information regarding the trained graph machine training model.

5. An information output device comprising a control unit configured to execute a process comprising:
specifying, for each of a plurality of pieces of graph data corresponding to at least one label corresponding to a prediction result of a trained graph machine training model, one or more nodes whose contribution degree to the prediction result of the graph data satisfies a predetermined condition;
specifying a frequent graph pattern from partial graph data including the specified nodes in each of one or more groups obtained by classifying the specified nodes; and
outputting information indicating the specified frequent graph pattern as explanatory information regarding the trained graph machine training model.
